# EUROPEAN PATENT APPLICATION

(11) **EP 2 611 128 A2**
(43) Date of publication of application: **03.07.2013**
(21) Application number: 11820171.4
(22) Date of filing: 23.08.2011
(51) Int. Cl.: H04M 11/06, H04M 3/42

(54) **VOICE-SCREEN ARS SERVICE SYSTEM, METHOD FOR PROVIDING SAME, AND COMPUTER-READABLE RECORDING MEDIUM**

(30) Priority: 24.08.2010 KR 20100081819
(71) Applicant: Call Gate Co., Ltd., Seoul 137-070 (KR)
(72) Inventor: KIM, Yong Jin, Seoul 137-040 (KR); KIM, David, Suwon-si Gyeonggi-do 443-372 (KR)
(74) Representative: von Kreisler Selting Werner
(86) International application number: PCT/KR2011/006226
(87) International publication number: WO 2012/026744

(57) **Abstract**

A method for providing a voice-screen ARS service on a terminal, according to an embodiment of the present invention, uses an application installed on the terminal to connect to an IVR system of a client company via a voice call and connects a data call to a VARS service server. Menu information including a plurality of menu items related to a client is received through a data call and displayed on a screen and voice information related to the menu is received through a voice call and output in audio. Accordingly, when a user uses the ARS, both services of voice and onscreen information are simultaneously provided and thereby decreases the limitations and inaccuracies of provided voice information increases user convenience.

## Description

### [Technical Field]

The present invention relates to a voice-screen ARS (automatic response system) service system, a method for providing a voice-screen ARS service, and a computer-readable recording medium, and more particularly to a system and method for simultaneously providing an ARS voice announcement and a menu screen according to the ARS voice announcement on an application for implementing a voice call by using an Internet network or a mobile communication network.

### [Background Art]

A business enterprise operating branch offices distributed all over the place, such as a bank, a security company, and a communication company, uses a call center system to respond to a customer's phone call for business that may be conducted only by a corresponding branch office.

A conventional call center system acquires the personal information of a customer (i.e., customer identification information) in response to a phone call from the customer, and then responds to the customer's request directly by an IVR (interactive voice response) system or connects the customer to a call center operator, who in turn responds to the customer's request.

That is, the conventional call center system provides a voice-only service by an IVR system or a call center operator. Thus, since a user has to listen to voice prompts and input information pursuant to the voice prompts, there is a problem in that the user has to wait while voice prompts are output. The conventional call center system also has a problem in that information that can be provided by voice prompts is limited and inaccurate.

### [Disclosure of the Invention]

### [Technical Problem]

To solve the above-mentioned problems occurring in the prior art, the present invention provides a voice-screen ARS service system for simultaneously outputting a voice announcement and a screen ARS service, a method for providing such a voice-screen ARS service, and a computer-readable recording medium.

### [Technical solution]

In accordance with an aspect of the present invention, there is provided a method for providing a voice-screen ARS (automatic response system) service in a terminal, the method including the steps of: providing a connection means for allowing a connection to be made to a client company IVR (interactive voice response) system; when a user makes a request for a connection to the client company IVR system by using the connection means, connecting a voice call to the client company IVR system through an Internet network or a mobile communication network and connecting a data call to a VARS (visual ARS) service server; receiving menu information including a plurality of menu items from the VARS service server through the data call and displaying the received menu information including the menu items; transmitting information on a menu item selected by the user from among the displayed menu items to the VARS service server through the data call, receiving screen information corresponding to the selected menu item from the VARS service server, and displaying the received screen information; and receiving voice information from the client company IVR system and outputting the received voice information. The information on the menu item selected by the user may be transferred directly to the client company IVR system through the voice call, and may also be transferred from the VARS service server to the client company IVR system.

The connection means may include a list of client companies, each of which can provide a VARS service. The list includes address information for connecting a voice call to an IVR system of each client company, and when the user selects one of the client companies included in the list, the terminal connects a voice call to an IVR system of the selected client company by using the address information corresponding to the selected client company. The list also includes unique information of each client company, and when the user selects one of the client companies included in the list, the terminal makes a request for a menu screen of the selected client company by transmitting the unique information corresponding to the selected client company to the VARS service server when or after connecting the data call to the VARS service server.

Alternatively, the connection means may include a dial pad. The terminal connects a voice call to an IVR system of a client company corresponding to a phone number that the user inputs using the dial pad. Also, the terminal makes a request for a menu screen of the client company corresponding to the input phone number by transmitting the input phone number to the VARS service server when or after connecting the data call to the VARS service server.

The step of connecting the voice and data calls may include the steps of: when the user makes the request for a connection to the client company IVR system by using the connection means, connecting the voice call to the client company IVR system; when the client company IVR system can provide a screen display function, displaying a button for screen access on a screen of the terminal; and when the user presses the button, connecting the data call to the VARS service server.

The menu items may include a menu item to which a uniform resource locator for detailed information is linked. When the user selects this menu item, the terminal accesses the linked uniform resource locator to receive and display the corresponding detailed information.

A unique number may be allocated to each of the menu items. In this case, in the step of receiving the voice information, the terminal generates a DTMF (dual tone multi frequency) tone corresponding to the unique number and transfers the generated DTMF tone through the voice call.

In accordance with another aspect of the present invention, there is provided a method for providing a voice-screen ARS (automatic response system) service in a terminal, the method including the steps of: when a user inputs a phone number of a client company IVR (interactive voice response) system, connecting a voice call to the client company IVR system; receiving an SMS (short message service) message for driving a VARS (visual ARS) service application and driving the VARS service application by the received SMS message; connecting a data call to a VARS service server through the VARS service application; receiving menu information including a plurality of menu items from the VARS service server through the data call and displaying the received menu information including the menu items; transmitting information on a menu item selected by the user from among the displayed menu items to the VARS service server through the data call, receiving screen information corresponding to the selected menu item from the VARS service server, and displaying the received screen information; and receiving voice information from the client company IVR system and outputting the received voice information. The information on the menu item selected by the user may be transferred directly to the client company IVR system through the voice call, and may also be transferred from the VARS service server to the client company IVR system.

The menu items may include a menu item to which a URL (uniform resource locator) for detailed information is linked. When the user selects this menu item, the terminal accesses the linked uniform address locator to receive and display the corresponding detailed information.

A unique number may be allocated to each of the menu items. In this case, the terminal generates a DTMF (dual tone multi frequency) tone corresponding to the unique number and transfers the generated DTMF tone through the voice call.

In accordance with yet another aspect of the present invention, there is provided a computer-readable recording medium recording a computer program for providing a voice-screen ARS (automatic response system) service in a terminal. The computer program includes the steps of: providing a connection means for allowing a connection to be made to a client company IVR (interactive voice response) system; when a user makes a request for a connection to the client company IVR system by using the connection means, connecting a voice call to the client company IVR system through an Internet network or a mobile communication network and connecting a data call to a VARS (visual ARS) service server; receiving menu information including a plurality of menu items from the VARS service server through the data call and displaying the received menu information including the menu items; transmitting information on a menu item selected by the user from among the displayed menu items to the VARS service server through the data call, receiving screen information corresponding to the selected menu item from the VARS service server, and displaying the received screen information; and receiving voice information from the client company IVR system and outputting the received voice information. The information on the menu item selected by the user may be transferred directly to the client company IVR system through the voice call, and may also be transferred from the VARS service server to the client company IVR system.

The connection means may include a list of client companies, each of which can provide a VARS service. The list includes address information for connecting a voice call to an IVR system of each client company, and when the user selects one of the client companies included in the list, the program connects a voice call to an IVR system of the selected client company by using the address information corresponding to the selected client company. The list also includes unique information of each client company. In this case, when the user selects one of the client companies included in the list, the program makes a request for a menu screen of the selected client company by transmitting the unique information corresponding to the selected client company to the VARS service server when or after connecting the data call to the VARS service server.

Alternatively, the connection means may include a dial pad. In this case, the program connects a voice call to an IVR system of a client company corresponding to a phone number that the user inputs using the dial pad. Also, the program makes a request for a menu screen of the client company corresponding to the input phone number by transmitting the input phone number to the VARS service server when or after connecting the data call to the VARS service server.

The step of connecting the voice and data calls may include the steps of: when the user makes the request for a connection to the client company IVR system by using the connection means, connecting the voice call to the client company IVR system; when the client company IVR system can provide a screen display function, displaying a button for screen access on a screen of the terminal; and when the user presses the button, connecting the data call to the VARS service server.

The menu items may include a menu item to which a uniform resource locator for detailed information is linked. When the user selects this menu item, the program accesses the linked uniform address locator to receive and display the corresponding detailed information.

A unique number may be allocated to each of the menu items. In this case, in the step of receiving the voice information, the program generates a DTMF (dual tone multi frequency) tone corresponding to the unique number and transfers the generated DTMF tone through the voice call.

In accordance with still yet another aspect of the present invention, there is provided a computer-readable recording medium recording a computer program for providing a voice-screen ARS (automatic response system) service in a terminal. The computer program includes the steps of: in a state where a voice call is connected to a client company IVR (interactive voice response) and a data call is connected to a VARS (visual ARS) service server, receiving menu information including a plurality of menu items from the VARS service server through the data call and displaying the received menu information including the menu items; transmitting information on a menu item selected by the user from among the displayed menu items to the VARS service server through the data call, receiving screen information corresponding to the selected menu item from the VARS service server, and displaying the received screen information; and receiving voice information from the client company IVR system and outputting the received voice information. The information on the menu item selected by the user may be transferred directly to the client company IVR system through the voice call, and may also be transferred from the VARS service server to the client company IVR system.

The menu items may include a menu item to which a uniform resource locator for detailed information is linked. When the user selects this menu item, the program accesses the linked uniform address locator to receive and display the corresponding detailed information.

A unique number may be allocated to each of the menu items. In this case, the program generates a DTMF (dual tone multi frequency) tone corresponding to the unique number and transfers the generated DTMF tone through the voice call.

In accordance with still yet another aspect of the present invention, there is provided a voice-screen ARS (automatic response system) service system including: a terminal installed with an application for providing a connection means for allowing a connection to be made to a client company IVR (interactive voice response) system, connecting a voice call to the client company IVR system through an Internet network or a mobile communication network and connecting a data call to a VARS (visual ARS) service server when a user makes a request for a connection to the client company IVR system by using the connection means, receiving menu information including a plurality of menu items from the VARS service server through the data call, and displaying the received menu information including the menu items; the VARS service server for receiving information on a menu item selected by the user from the terminal and transmitting screen information corresponding to the selected menu item to the terminal; and the client company IVR system for transmitting an ARS main voice message to the terminal when the voice call is connected to the terminal and transmitting a voice message corresponding to the selected menu item to the terminal when receiving the information on the selected menu item from the terminal.

The connection means may include a list of client companies, each of which can provide a VARS service. The list includes address information for connecting a voice call to an IVR system of each client company and unique information of each client company. When the user selects one of the client companies included in the list, the application connects a voice call to an IVR system of the selected client company by using the address information corresponding to the selected client company, and transmits the unique information corresponding to the selected client company to the VARS service server when or after connecting the data call to the VARS service server.

Alternatively, the connection means may include a dial pad. The application connects a voice call to an IVR system of a client company corresponding to a phone number that the user inputs using the dial pad, and transmits the input phone number to the VARS service server when or after connecting the data call to the VARS service server.

The client company IVR system may transmit an SMS (short message service) message for driving the application to the terminal when the voice call is connected to the terminal, and the application may be driven by the received SMS message to connect the data call to the VARS service server.

The menu items may include a menu item to which a uniform resource locator for detailed information is linked. When the user selects this menu item, the application accesses the linked uniform address locator to receive the corresponding detailed information and display the received detailed information on a screen of the terminal.

In accordance with still yet another aspect of the present invention, there is provided a voice-screen ARS (automatic response system) service system including: a terminal installed with an application for connecting a data call to a VARS (visual ARS) service server by being driven by an SMS (short message service) message, receiving information to be displayed on a screen of the terminal from the VARS service server, and displaying the received information on the screen; the VARS service server for transmitting menu information including a plurality of menu items to the terminal when the data call is connected to the terminal, receiving information on a menu item selected by a user from the terminal, and transmitting screen information corresponding to the selected menu item to the terminal; and a client company IVR system for transmitting the SMS message for driving the application to the terminal when a voice call is connected to the terminal and transmitting voice information corresponding to the selected menu item to the terminal. The VARS service server may transmit the information on the selected menu item to the client company IVR system at a time when receiving the information on the selected menu item from the terminal and transmitting the screen information corresponding to the selected menu item to the terminal.

### [Advantageous Effects]

According to the present invention as described above, limitations and inaccuracies in providing voice information can be reduced and user convenience can be increased by simultaneously providing both voice and screen information services when a user uses an ARS service system.

Further, since it is possible for a user to input information by using a menu displayed on a screen when he/she uses an ARS. service system, inconvenience can be prevented from being caused by the fact that the user has to listen to unnecessary voice prompts.

Further, convenience for use is provided because a user can be connected to both a client company IVR system and a VARS service server at the same time by using a connection means.

### [Brief Description of the Drawings]

FIG. 1 is a block diagram illustrating a configuration of a voice-screen ARS service system according to an embodiment of the present invention;
FIG. 2 is a view illustrating examples of screen images on a terminal in a process of providing a voice-screen ARS service according to embodiments of the present invention;
FIG. 3 is a flowchart illustrating a method for providing a voice-screen ARS service according to a first embodiment of the present invention;
FIG. 4 is a flowchart illustrating a method for providing a voice-screen ARS service according to a second embodiment of the present invention; and
FIG. 5 is a flowchart illustrating a method for providing a voice-screen ARS service according to another embodiment of the present invention.

### <Description of Reference Numerals for Main Parts of the Drawings>

100: voice-screen ARS service providing system
110: terminal
120: client company IVR system
130: VARS service server
140: legacy server

### [Mode for Carrying Out the Invention]

Hereinafter, embodiments of a voice-screen ARS service system and a method for providing a voice-screen ARS service according to the present invention will be described in detail with reference to the accompanying drawings.

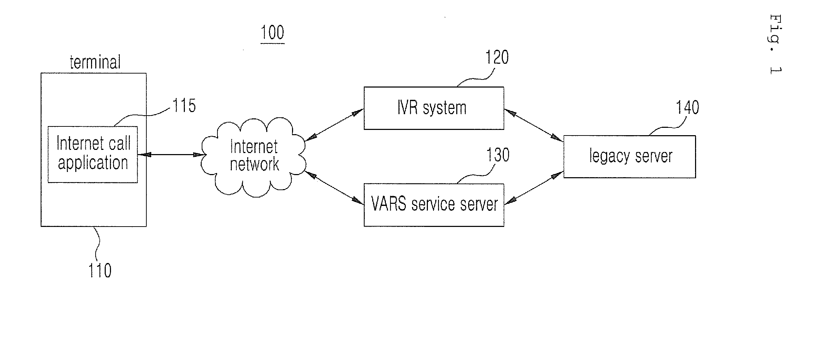

FIG. 1 is a block diagram illustrating a configuration of a voice-screen ARS service system according to an embodiment of the present invention.

As shown in FIG. 1, the voice-screen ARS (automatic response system) service system 100 includes a terminal 110, IVR (interactive voice response) systems 120 of a plurality of client companies, and a VARS (visual ARS) service server 130.

The terminal 110 may include a smart phone, an embedded phone, a tablet such as iPad (trademark of Apple), a personal PC, etc., and an Internet call application 115 for performing a VoIP (voice over Internet protocol) voice call with the client company IVR system 120 and performing a data call with the VARS service server 130 through a WLAN (wireless local area network), a packet network via a mobile communication network, or a wireless Internet network such as Wibro is installed on the terminal 110. This application may be in the form of a computer program that is downloaded and installed onto a smart phone, a computer, or the like, or may be a program preinstalled on a cellular phone, a smart phone, or the like. The terminal 110 may execute the application to implement a VoIP voice call with the client company IVR system 120 and connect a data call/VoIP voice call to the VARS service server 130 through a packet network. To this end, the address information of the VARS service server 130 and the address information of each client company IVR system 120 are stored in the Internet call application 115. Instead of the VoIP voice call through the packet network, it is also possible to connect a voice call to the client company IVR system 120 through a circuit network such as a mobile communication network.

The terminal 110 provides a connection means for connecting a voice call to each client company IVR system through a packet network or a circuit network. As an example, this connection means may be a list of client companies registered with the Internet call application, each of which can provide a VARS service. This list may include address information for connecting a voice call to each client company IVR system (e.g., the phone number of each client company IVR system) and unique information for identifying each client company (e.g., client company name or client company code). It is also possible to use the address information as the unique information, instead of separate unique information.

Alternatively, the connection means 110 may be a dial pad on a touchpad of the terminal 110 or a keypad or keyboard on the terminal 110. In this case, a user may directly input a phone number by using the dial pad, keypad, or keyboard to thereby connect a voice call to a corresponding client company IVR system. Of course, dialing a phone number using the touchpad may be replaced by voice dialing or dialing using a phonebook.

The terminal 110 connects a VoIP voice call to the client company IVR system 120 and simultaneously connects a data call to the VARS service server 130 through the connection means to transmit the address information or unique information of the corresponding client company. Upon receiving this information, the VARS service server 130 transmits an ARS main menu screen corresponding to the corresponding client company to the terminal 110, and the client company IVR system 120 transmits an ARS main voice announcement corresponding to the corresponding client company to the terminal 110.

The client company IVR system 120 transmits an ARS main menu voice announcement to the terminal 110 after a voice call is connected to the terminal 110, and when a user selects one of menu items displayed on the terminal 110 and information on the selected menu item is transferred as packet data or a DTMF (dual tone multi frequency) tone from the terminal 110, transmits an ARS voice announcement for a submenu or detailed information corresponding to the selected menu item to the terminal 110.

Also, when the terminal 110 is a terminal installed with the Internet call application 115, the client company IVR system 120 may transmit an SMS (short message service) message for driving the Internet call application 115 to the terminal 115 after a voice call is connected to the terminal 115 and thereby drive the Internet call application 115 installed in the terminal 115. The SMS message may also include a push notification that is an SMS message transmitted to a device by a service provider, in addition to a typical SMS message for transfer to a user. To detect if the Internet call application 115 is installed in the terminal 110, it is also possible to register information on the terminal 110, such as the phone number of the terminal 110, when the Internet call application 115 is downloaded onto the terminal 110.

In a case where the client company IVR system 120 can provide a screen display function, the Internet call application 115 may display a button for screen access on the terminal screen when a user establishes a call connection to the corresponding client company IVR system 120 by using the connection means, and connect a data call to the VARS service server 130 when the user selects the button.

The VARS service server 130 receives information on a client company from the terminal 110 and transmits an ARS main menu screen of the corresponding client company to the terminal 110 when a data call is connected to the terminal 110. Also, upon receiving information on a menu item selected by a user from the terminal 110, the VARS service server 130 transmits screen information corresponding to the selected menu item, for example, a submenu screen or a detailed information screen, to the terminal 110. As an example, in a case where the main menu screen includes menu items named "additional service", "charge inquiry", and the like, and the menu item "additional service" includes submenu items named "change charge plan", "change dial tone", and the like, the VARS service server 130 transmits a submenu screen showing these submenu items to the terminal 110 when the menu item "additional service" is selected, and transmits a detailed information screen showing the usage charge details of a user to the terminal 110 when the menu item "charge inquiry" is selected.

With regard to this, if information retrieval from a legacy server 140 of the corresponding client company is required to provide a detailed information screen for the selected menu item, then the VARS service server 130 accesses the corresponding legacy server 140 to retrieve information and configure the corresponding screen, and then transmits the configured screen to the terminal 110. As an example, when the client company is a communication company and the menu item selected by a user corresponds to "charge inquiry", the VARS service server 130 accesses a legacy server 140 of the corresponding communication company to retrieve information on the usage charge of the corresponding user and configure a screen showing the usage charge, and then transmits the configured screen to the terminal 1110. As another example, when the client company is a bank and the menu item selected by a user corresponds to "balance inquiry", the VARS service server 130 accesses a legacy server 140 of the bank to retrieve information of the balance of the corresponding user and configure showing the balance, and then transmits the configured screen to the terminal 110.

A unique number may be allocated to each of menu items. As an example, number "1" is allocated to "charge information", number "2" is allocated to "additional service", and the like. In this case, information on a menu item selected by a user may be transferred in the form of a DTMF tone corresponding to the number allocated to the corresponding menu item through a voice call.

In addition, the menu items may include a menu item to which the uniform resource locator (URL) of a site providing detailed information is linked. When a user selects this menu item, the Internet call application 115 may access the linked URL to request the corresponding site for the corresponding detailed information and receive the requested detailed information through a data call.

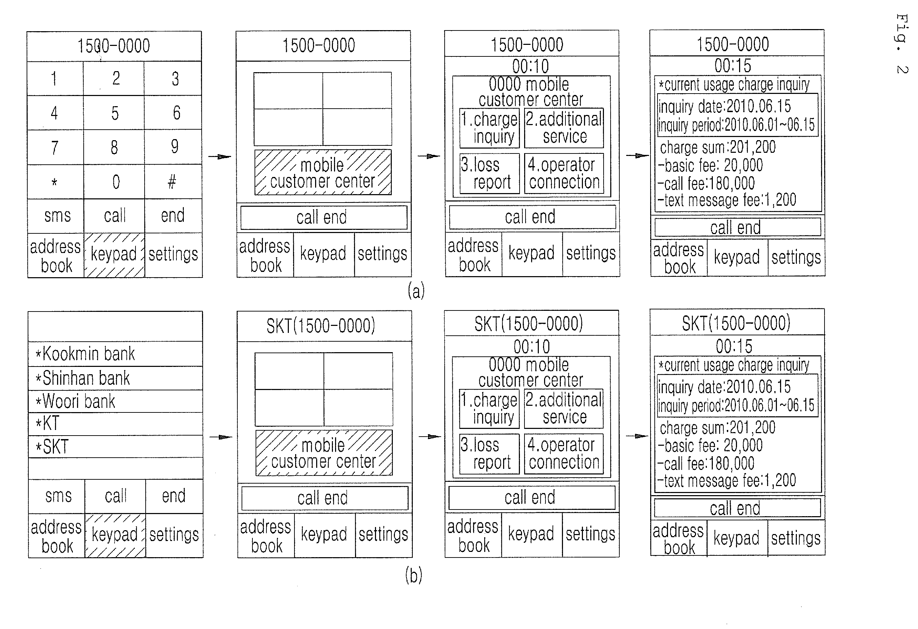

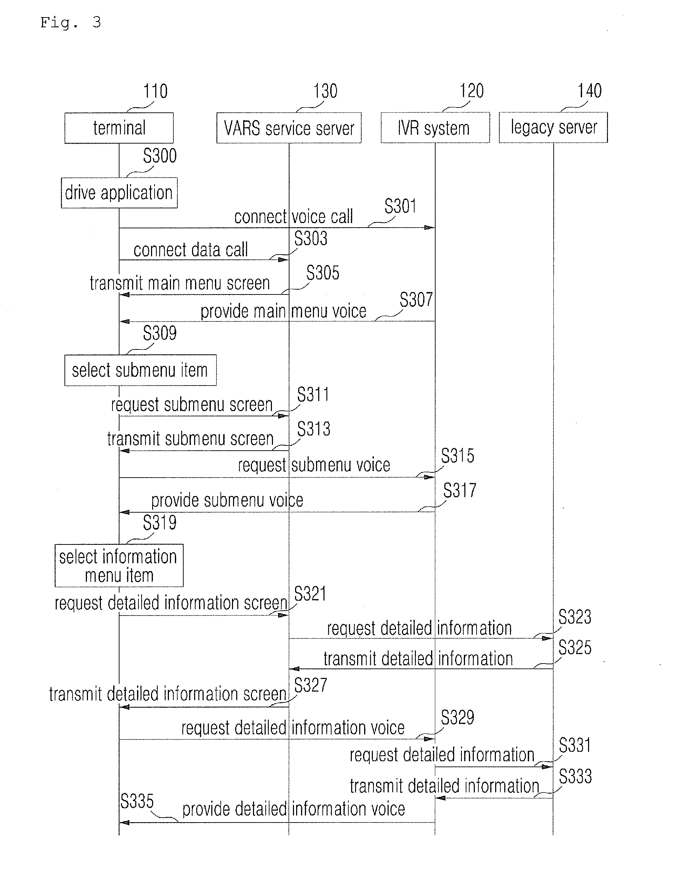

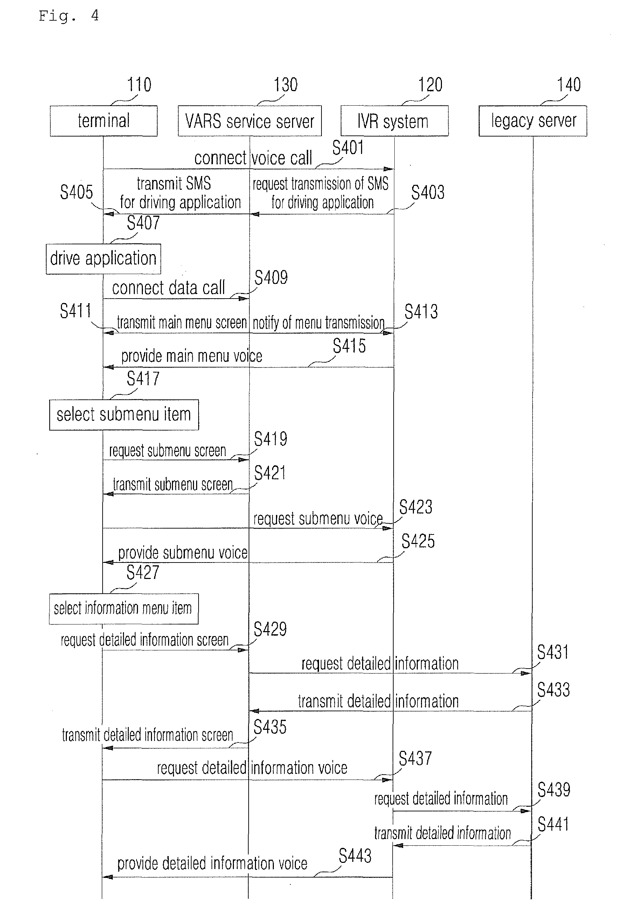

FIG. 2 is a view illustrating examples of screen images on a terminal in a process of providing a voice-screen ARS service according to embodiments of the present invention, and FIGS. 3 and 4 are flowcharts each illustrating a method for providing a voice-screen ARS service according to an embodiment of the present invention.

First, a method for providing a voice-screen ARS service according to a first embodiment of the present invention will be described with reference to FIG. 3.

When a user drives the Internet call application 115 installed in the terminal 110 (S300), and then directly inputs a phone number by using a dial pad provided by the Internet call application 115 or selects a desired client company from a list of client company IVR systems provided by the Internet call application 115 or an address book on the terminal 110, the Internet cal application 115 connects a voice call to the corresponding client company IVR system 120 (S301) and simultaneously connects a data call to the VARS service server (S303).

After the voice call is connected to the corresponding client company IVR system 120, it is also possible to display a button for screen access to the VARS service server 130 only when the corresponding client company can provide a VARS service, and connect the data call to the VARS service server 130 only when the user selects the button.

In this regard, referring to FIG. 2, (a) of FIG. 2 corresponds to a case where the user inputs a phone number by using a dial pad provided by the Internet call application 115, and shows a series of screen images in which a voice call is connected to the client company IVR system 120 matched to the input phone number, a menu ("mobile customer center") for access to the VARS service server 130 of the corresponding client company is displayed on the screen of the terminal 110 when the corresponding company provides a VARS service, a data call is connected to the VARS service server 130 when the user selects the menu ("mobile customer center"), an ARS main menu screen received from the VARS service server 130 is displayed, and information provided by selecting a menu item is displayed.

Also, (b) of FIG. 2 corresponds to a case where the user scans an address book (client company list) stored in the Internet call application 115 and selects a desired client company, and shows a series of screen images in which a voice call is connected to the client company IVR system 120 of the client company selected by the user from the client company list, a menu ("mobile customer center") for access to the VARS service server 130 of the corresponding client company is displayed on the screen of the terminal 110 when the corresponding company provides a VARS service, a data call is connected to the VARS service server 130 when the user selects the menu ("mobile customer center"), an ARS main menu screen received from the VARS service server 130 is displayed, and information provided by selecting a menu item is displayed.

After the data call is connected to the VARS service server 130, the Internet call application 115 may request the VARS service server 130 for the ARS main menu screen of the corresponding client company by transferring information on the client company or client company IVR system, for example, the unique code of the corresponding client company or the called number of the client company IVR system, to the VARS service server 130.

According to the client company information received from the terminal 110, the VARS service server 130 transmits the ARS main menu screen of the corresponding client company to the terminal 110 (S305). Then, the Internet call application 115 displays the received ARS main menu screen on the screen of the terminal 110. Also, the client company IVR system 120 transmits an ARS main menu voice announcement to the terminal 110 through the voice call, and the Internet call application 115 vocally outputs the received ARS main menu voice announcement (S307).

In order to first display the ARS main menu screen and then output the ARS main menu voice announcement, the terminal 110 may provide the ARS main menu voice announcement with a slight time delay in consideration of the time required to access the VARS service server 130 and receive and display the main menu screen. Alternatively, it is also possible to connect the data call to the VARS service server 130 and then connect the voice call to the client company IVR system 120.

If the user selects one menu item from the ARS main menu displayed on the terminal 110 (S309), then the Internet call application 115 transmits information on the selected menu item to the VARS service server 130 (S311). As an example, if the user selects a menu item named "additional service", then the Internet call application 115 transmits information indicating that the menu item "additional service" has been selected. When the selected menu item is a menu item having a submenu, such as the menu item "additional service", the VARS service server 130 transmits a submenu screen of the menu item selected by the user to the terminal 110 (S313), and the Internet call application 115 installed in the terminal 110 displays the received submenu screen.

The Internet call application 115 also transmits the information on the selected menu item to the client company IVR system 120 before, when, or after transmitting the information on the selected menu item to the VARS service server 130, and thereby requests the client company IVR system 120 for a submenu voice announcement (S315). In order to first display the submenu screen and then output the submenu voice announcement, the Internet call application 115 may transmit the information on the selected menu item to the VARS service server 130, and then after a certain time, transmit the information on the selected menu item to the client company IVR system 120.

Upon receiving the information on the selected menu item, the client company IVR system 120 transmits the submenu voice announcement corresponding to the selected menu item to the terminal 110 (S317), and the terminal 110 vocally outputs the received submenu voice announcement.

With regard to this, when the terminal 110 requests the client company IVR system 120 for the submenu voice announcement by transmitting the information on the menu item selected by the user, the terminal 110 may transmit, for example, a number allocated to the corresponding menu item as packet data to the client company IVR system 120 through a packet network, or generate a DTMF tone of the corresponding number and transmit the generated DTMF tone to the client company IVR system 120 through the voice call.

Although the menu item having a submenu has been described above, some menu items in the main menu, such as a menu item named "balance inquiry", may directly provide detailed information. If the user selects such a menu item directly providing detailed information (S319), the Internet call application 115 transmits information on the selected menu item to the VARS service server 130 (S321). When the selected menu item requires data retrieval from a legacy server 140 of the corresponding client company, the VARS service server 130 requests the legacy server 140 of the corresponding client company for relevant data or a detailed information screen including relevant data (S323). Then, the legacy server 140 transmits the requested relevant data or detailed information screen to the VARS service server 130 (S325), and the VARS service server 130 directly transmits the detailed information screen to the terminal 110 or configures a detailed information screen by using the received relevant data and transmits the configured detailed information screen to the terminal 110 (S327).

Alternatively, in a case where a uniform resource locator (URL) for detailed information is mapped to the detailed information providing menu item, the Internet call application 115 may directly access the URL and receive the corresponding detailed information through the data call when the user selects the detailed information providing menu item. In this case, the Internet call application 115 displays the received detailed information or launches a separate browser window and displays the detailed information in the form of a WAP or mobile web page.

The Internet cal application 115 also transmits the information on the selected menu item to the client company IVR system 120 before, when, or after requesting the VARS service server 130 for the detailed information screen related to the selected menu item, and thereby requests the client company IVR system 120 for a detailed information voice announcement corresponding to the detailed information screen (S329). In order to first display the detailed information screen and then output the detailed information voice announcement, the Internet call application 115 may transmit the information on the selected menu item to the VARS service server 130, and then after a certain time, transmit the information on the selected menu item to the client company IVR system 120. Upon receiving the information on the selected menu item, the client company IVR system 120 transmits the detailed information voice announcement to the terminal 110 through the voice call (S335), and then the Internet call application 115 vocally outputs the received detailed information voice announcement. When the selected menu item requires data retrieval from a legacy server 140 of the corresponding client company, the client company IVR system 120 requests the legacy server 140 of the corresponding client company for relevant data, receives the requested data, converts the received data into a voice signal, and transmits the converted voice signal to the terminal 110.

Next, a method for providing a voice-screen ARS service according to a second embodiment of the present invention will be described with reference to FIG. 4.

In this embodiment, for a terminal 110 installed with the Internet call application 115, the client company IVR system 120 transmits an SMS message for driving the Internet call application 115 to the terminal 110 when a user connects the terminal 110 to the client company IVR system 120 by using a dial pad or an address book provided on the terminal 110, and the Internet call application 115 is driven by the SMS message in the terminal 110 to provide the voice-screen ARS service.

That is, when a user calls the client company IVR system 120 by using a dial pad or an address book, a voice call is connected between the terminal 110 and the client company IVR system 130 through a packet network or a circuit network (S401). Then, the client company IVR system 120 checks if the terminal 110 is a terminal installed with the Internet call application 115. When the Internet call application 115 is installed in the terminal 1110, the client company IVR system 120 requests the VARS service server 130 to transmit an SMS message for driving the Internet call application 115 to the terminal 110 (S403). Instead of requesting the VARS service server 130 to transmit the SMS message, the client company IVR system 120 may transmit the SMS message directly to the terminal 110 or request a separate SMS message server to transmit the SMS message.

Upon receiving the request for transmitting the SMS message, the VARS service server 130 transmits the SMS message for driving the Internet call application 115 to the corresponding terminal 110 (S405). In addition to a typical SMS message for transfer to a user, a push notification transmitted to a device by a service provider may be used as the SMS message. If the terminal 110 receives the SMS message, the Internet call application 115 is driven by a code included in the SMS message (S407).

Upon being driven by the code included in the SMS message, the Internet call application 115 connects a data call to the VARS service server 130 (S409). At this time, the Internet call application 115 may transmit information on the client company IVR system 120, to which the voice call is currently being connected, to the VARS service server 130. Alternatively, it is also possible for the VARS service server 130 to identify, through the procedure in step S403, to which client company IVR system 120 the corresponding terminal 110 connects the voice call.

When the data call is connected to the terminal 110, the VARS service server 130 transmits a main menu screen related to the client company IVR system 130, to which the terminal 110 connects the voice call, to the terminal 110 (S411). Also, the VARS service server 130 notifies the client company IVR system 120 of transmission of the main menu screen just before, when, or shortly after transmitting the main menu screen to the terminal 110 (S413). Then, the client company IVR system 120 transmits a voice announcement corresponding to the main menu screen to the terminal 110 (S415).

According to embodiments of the present invention, it is also possible to terminate the voice call between the terminal 110 and the client company IVR system 120 when the Internet call application 115 is driven and connect a voice call to the client company IVR system 120 again.

Also, since the voice call between the terminal 110 and the client company IVR system 120 is continuously connected from step S401 till step S413, it is also possible for the client company IVR system 120 to transmit a voice prompt instructing the user to wait a moment or play music for the user until the Internet call application 115 is driven.

Steps S417 to S443 of FIG. 4 are substantially the same as or similar to steps S301 to S335 of FIG. 3, so a detailed description thereof will be omitted.

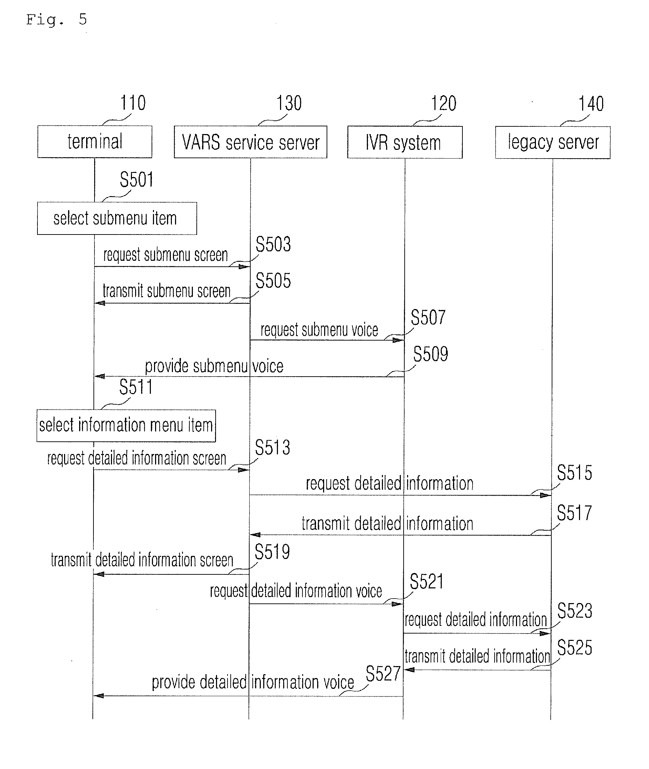

A voice announcement from the client company IVR system 120 and a corresponding display screen from the VARS service server 130 may be output at different points of time in the terminal 110 depending on the system environment or terminal options. Accordingly, in order to first display a screen and then output a voice announcement corresponding thereto, it is also possible to replace steps S309 to S335 or steps S417 to S443 by steps S501 to S527 of FIG. 5.

That is, if the user selects one menu item from the ARS main menu displayed on the terminal 110 (S501), then the Internet call application 115 transmits information on the selected menu item to the VARS service server 130 (S503). As an example, if the user selects a menu item named "additional service", then the Internet call application 115 transmits information indicating that the menu item "additional service" has been selected. When the selected menu item is a menu item having a submenu, such as the menu item "additional service", the VARS service server 130 transmits a submenu screen of the menu item selected by the user to the terminal 110 (S505), and the Internet call application 115 installed in the terminal 110 displays the received submenu screen.

Here, the VARS service server 130 also transmits the information on the selected menu item to the client company IVR system 120 before, when, or after transmitting the submenu screen to the terminal 110, and thereby requests the client company IVR system 120 for a submenu voice announcement (S507). Then, the client company IVR system 120 transmits the requested submenu voice announcement to the terminal through the voice call (S509), and thus it is possible to first display the submenu screen and then output the submenu voice announcement.

Similarly, this is also achieved for an information menu item that is a menu item directly providing detailed information. That is, if the user selects a menu item corresponding to an information menu item from the ARS main menu (S511), the Internet call application 115 transmits information on the selected menu item to the VARS service server 130 (S513). When the selected menu item is a menu item for making a request for detailed information, such as "balance inquiry", and requires data retrieval from a legacy server 140 of the corresponding client company to acquire the detail information, the VARS service server 130 requests the legacy server 140 of the corresponding client company for relevant data or a detailed information screen including relevant data (S5151). Then, the legacy server 140 transmits the requested relevant data or detailed information screen to the VARS service server 130 (S517), and the VARS service server 130 directly transmits the detailed information screen to the terminal 110 or configures a detailed information screen by using the received relevant data and transmits the configured detailed information screen to the terminal 110 (S519).

Here, the VARS service server 130 also transmits the information on the selected menu item to the client company IVR system 120 before, when, or after transmitting the submenu screen to the terminal 110, and thereby requests the client company IVR system 120 for a detailed information voice announcement (S521). Then, the client company IVR system 120 requests the legacy server 140 for relevant data (S523), and the legacy server 140 provides the requested data to the client company IVR system 120 (S525). Upon receiving the data related to the detailed information, the client company IVR system 120 converts the received detailed information into a detailed information voice announcement and transmits the converted voice announcement to the terminal 110 through the voice call (S527), and thus it is possible to first display the detailed information screen and then output the detailed information voice announcement.

Further, all or some functions of the present invention may be implemented in the form of a computer-readable recording medium recording a computer program for executing the inventive voice-screen ARS service system and the inventive method for providing a voice-screen ARS service. Examples of such a recording medium may include conventional memory devices such as floppy disks, hard disks, CD ROMs, and memory cards. Alternatively, it is also possible to download and use such a computer program through an Internet network, a computer communication network, or the like.

Although several preferred embodiments of the present invention have been described for illustrative purposes, the present invention is not limited to these embodiments and those skilled in the art will appreciate that various modifications, additions and substitutions are possible, without departing from the scope and spirit of the invention in the widest form as disclosed in the accompanying claims.

As an example, in the foregoing, the VARS service server, the client company IVR system, and the content server have been described as being separately configured, but it is also possible to incorporate all of these constituent elements into one server or integrate any two constituent elements into one constituent element. Also, in the forgoing, only the ARS main menu screen, the submenu screen, and the detailed information have been described, but it is also possible to further provide a sub-submenu under each submenu item.

### [Industrial Applicability]

In view of the fact that the present invention simultaneously provides both voice and screen information services when a user uses an ARS service system, allows a user to input information by using a menu displayed on a screen when he/she uses an ARS service system, and allows a user to make a connection to both a client company IVR system and a VARS service server at the time by using a connection means, the present invention overcomes the limitations of the prior art. Accordingly, since not only the present invention can be employed in related technologies and provide the sufficient salability and marketability of apparatuses to which the present invention is applied, but also it is apparent to those skilled in the art that the present invention can be actually implemented, the present invention has industrial applicability.

## Claims

1. A method for providing a voice-screen ARS (automatic response system) service in a terminal, the method comprising the steps of:
providing a connection means for allowing a connection to be made to a client company IVR (interactive voice response) system;
when a user makes a request for a connection to the client company IVR system by using the connection means, connecting a voice call to the client company IVR system through an Internet network or a mobile communication network and connecting a data call to a VARS (visual ARS) service server;
receiving menu information including a plurality of menu items from the VARS service server through the data call and displaying the received menu information including the menu items;
transmitting information on a menu item selected by the user from among the displayed menu items to the VARS service server through the data call, receiving screen information corresponding to the selected menu item from the VARS service server, and displaying the received screen information; and
transmitting the information on the menu item selected by the user to the client company IVR system through the voice call, receiving voice information corresponding to the selected menu item from the client company IVR system, and outputting the received voice information.

2. A method for providing a voice-screen ARS (automatic response system) service in a terminal, the method comprising the steps of:
providing a connection means for allowing a connection to be made to a client company IVR (interactive voice response) system;
when a user makes a request for a connection to the client company IVR system by using the connection means, connecting a voice call to the client company IVR system through an Internet network or a mobile communication network and connecting a data call to a VARS (visual ARS) service server;
receiving menu information including a plurality of menu items from the VARS service server through the data call and displaying the received menu information including the menu items;
transmitting information on a menu item selected by the user from among the displayed menu items to the VARS service server through the data call, receiving screen information corresponding to the selected menu item from the VARS service server, and displaying the received screen information; and
receiving voice information corresponding to the selected menu item from the client company IVR system and outputting the received voice information.

3. The method as claimed in claim 1 or 2, wherein the connection means comprises a list of client companies, each of which can provide a VARS service, the list includes address information for connecting a voice call to an IVR system of each client company, and when the user selects one of the client companies included in the list, the terminal connects a voice call to an IVR system of the selected client company by using the address information corresponding to the selected client company.

4. The method as claimed in claim 3, wherein the list includes unique information of each client company, and the terminal makes a request for a menu screen of the selected client company by transmitting the unique information corresponding to the selected client company to the VARS service server when or after connecting the data call to the VARS service server.

5. The method as claimed in claim 1 or 2, wherein the connection means comprises a dial pad, and the terminal connects a voice call to an IVR system of a client company corresponding to a phone number that the user inputs using the dial pad.

6. The method as claimed in claim 5, wherein the terminal makes a request for a menu screen of the client company corresponding to the input phone number by transmitting the input phone number to the VARS service server when or after connecting the data call to the VARS service server.

7. The method as claimed in claim 1 or 2, wherein the step of connecting the voice and data calls comprises the steps of:
when the user makes the request for a connection to the client company IVR system by using the connection means, connecting the voice call to the client company IVR system;
when the client company IVR system can provide a screen display function, displaying a button for screen access on a screen of the terminal; and
when the user presses the button, connecting the data call to the VARS service server.

8. The method as claimed in claim 1 or 2, wherein the menu items includes a menu item to which a uniform resource locator for detailed information is linked, and when the user selects the menu item, the terminal accesses the linked uniform resource locator to receive and display the corresponding detailed information.

9. The method as claimed in claim 1, wherein a unique number is allocated to each of the menu items, and the step of transmitting the information on the menu item selected by the user to the client company IVR system through the voice call comprises the step of generating a DTMF (dual tone multi frequency) tone corresponding to the unique number and transferring the generated DTMF tone through the voice call by the terminal.

10. A method for providing a voice-screen ARS (automatic response system) service in a terminal, the method comprising the steps of:
when a user inputs a phone number of a client company IVR (interactive voice response) system, connecting a voice call to the client company IVR system;
receiving an SMS (short message service) message for driving a VARS (visual ARS) service application and driving the VARS service application by the received SMS message;
connecting a data call to a VARS service server through the VARS service application;
receiving menu information including a plurality of menu items from the VARS service server through the data call and displaying the received menu information including the menu items;
transmitting information on a menu item selected by the user from among the displayed menu items to the VARS service server through the data call, receiving screen information corresponding to the selected menu item from the VARS service server, and displaying the received screen information; and
transmitting the information on the menu item selected by the user to the client company IVR system through the voice call, receiving voice information corresponding to the selected menu item from the client company IVR system, and outputting the received voice information.

11. A method for providing a voice-screen ARS (automatic response system) service in a terminal, the method comprising the steps of:
when a user inputs a phone number of a client company IVR (interactive voice response) system, connecting a voice call to the client company IVR system;
receiving an SMS (short message service) message for driving a VARS (visual ARS) service application and driving the VARS service application by the received SMS message;
connecting a data call to a VARS service server through the VARS service application;
receiving menu information including a plurality of menu items from the VARS service server through the data call and displaying the received menu information including the menu items;
transmitting information on a menu item selected by the user from among the displayed menu items to the VARS service server through the data call, receiving screen information corresponding to the selected menu item from the VARS service server, and displaying the received screen information; and
receiving voice information corresponding to the selected menu item from the client company IVR system, and outputting the received voice information.

12. The method as claimed in claim 10 or 11, wherein the menu items includes a menu item to which a uniform resource locator for detailed information is linked, and when the user selects the menu item, the terminal accesses the linked uniform address locator to receive and display the corresponding detailed information.

13. The method as claimed in claim 10, wherein a unique number is allocated to each of the menu items, and the step of transmitting the information on the menu item selected by the user to the client company IVR system through the voice call comprises the step of generating a DTMF (dual tone multi frequency) tone corresponding to the unique number and transferring the generated DTMF tone through the voice call.

14. A computer-readable recording medium recording a computer program for providing a voice-screen ARS (automatic response system) service in a terminal, the computer program comprising the steps of:
providing a connection means for allowing a connection to be made to a client company IVR (interactive voice response) system;
when a user makes a request for a connection to the client company IVR system by using the connection means, connecting a voice call to the client company IVR system through an Internet network or a mobile communication network and connecting a data call to a VARS (visual ARS) service server;
receiving menu information including a plurality of menu items from the VARS service server through the data call and displaying the received menu information including the menu items;
transmitting information on a menu item selected by the user from among the displayed menu items to the VARS service server through the data call, receiving screen information corresponding to the selected menu item from the VARS service server, and displaying the received screen information; and
transmitting the information on the menu item selected by the user to the client company IVR system through the voice call, receiving voice information corresponding to the selected menu item from the client company IVR system, and outputting the received voice information.

15. A computer-readable recording medium recording a computer program for providing a voice-screen ARS (automatic response system) service in a terminal, the computer program comprising the steps of:
providing a connection means for allowing a connection to be made to a client company IVR (interactive voice response) system;
when a user makes a request for a connection to the client company IVR system by using the connection means, connecting a voice call to the client company IVR system through an Internet network or a mobile communication network and connecting a data call to a VARS (visual ARS) service server;
receiving menu information including a plurality of menu items from the VARS service server through the data call and displaying the received menu information including the menu items;
transmitting information on a menu item selected by the user from among the displayed menu items to the VARS service server through the data call, receiving screen information corresponding to the selected menu item from the VARS service server, and displaying the received screen information; and
receiving voice information corresponding to the selected menu item from the client company IVR system and outputting the received voice information.

16. The computer-readable recording medium as claimed in claim 14 or 15, wherein the connection means comprises a list of client companies, each of which can provide a VARS service, the list includes address information for connecting a voice call to an IVR system of each client company, and when the user selects one of the client companies included in the list, the computer program connects a voice call to an IVR system of the selected client company by using the address information corresponding to the selected client company.

17. The computer-readable recording medium as claimed in claim 16, wherein the list includes unique information of each client company, and the computer program makes a request for a menu screen of the selected client company by transmitting the unique information corresponding to the selected client company to the VARS service server when or after connecting the data call to the VARS service server.

18. The computer-readable recording medium as claimed in claim 14 or 15, wherein the connection means comprises a dial pad, and the computer program connects a voice call to an IVR system of a client company corresponding to a phone number that the user inputs using the dial pad.

19. The computer-readable recording medium as claimed in claim 18, wherein the computer program makes a request for a menu screen of the client company corresponding to the input phone number by transmitting the input phone number to the VARS service server when or after connecting the data call to the VARS service server.

20. The computer-readable recording medium as claimed in claim 14 or 15, wherein the step of connecting the voice and data calls comprises the steps of:
when the user makes the request for a connection to the client company IVR system by using the connection means, connecting the voice call to the client company IVR system;
when the client company IVR system can provide a screen display function, displaying a button for screen access on a screen of the terminal; and
when the user presses the button, connecting the data call to the VARS service server.

21. The computer-readable recording medium as claimed in claim 14 or 15, wherein the menu items includes a menu item to which a uniform resource locator for detailed information is linked, and when the user selects the menu item, the computer program accesses the linked uniform resource locator to receive and display the corresponding detailed information.

22. The computer-readable recording medium as claimed in claim 14, wherein a unique number is allocated to each of the menu items, and the step of transmitting the information on the menu item selected by the user to the client company IVR system through the voice call comprises the step of generating a DTMF (dual tone multi frequency) tone corresponding to the unique number and transferring the generated DTMF tone through the voice call.

23. A computer-readable recording medium recording a computer program for providing a voice-screen ARS (automatic response system) service in a terminal, the computer program comprising the steps of:
in a state where a voice call is connected to a client company IVR (interactive voice response) and a data call is connected to a VARS (visual ARS) service server, receiving menu information including a plurality of menu items from the VARS service server through the data call and displaying the received menu information including the menu items;
transmitting information on a menu item selected by the user from among the displayed menu items to the VARS service server through the data call, receiving screen information corresponding to the selected menu item from the VARS service server, and displaying the received screen information; and
transmitting the information on the menu item selected by the user to the client company IVR system through the voice call, receiving voice information corresponding to the selected menu item from the client company IVR system, and outputting the received voice information.

24. A computer-readable recording medium recording a computer program for providing a voice-screen ARS (automatic response system) service in a terminal, the computer program comprising the steps of:
in a state where a voice call is connected to a client company IVR (interactive voice response) and a data call is connected to a VARS (visual ARS) service server, receiving menu information including a plurality of menu items from the VARS service server through the data call and displaying the received menu information including the menu items;
transmitting information on a menu item selected by the user from among the displayed menu items to the VARS service server through the data call, receiving screen information corresponding to the selected menu item from the VARS service server, and displaying the received screen information; and
receiving voice information corresponding to the selected menu item from the client company IVR system and outputting the received voice information.

25. The computer-readable recording medium as claimed in claim 23 or 24, wherein the menu items includes a menu item to which a uniform resource locator for detailed information is linked, and when the user selects the menu item, the computer program accesses the linked uniform address locator to receive and display the corresponding detailed information.

26. The computer-readable recording medium as claimed in claim 23, wherein a unique number is allocated to each of the menu items, and the step of transmitting the information on the menu item selected by the user to the client company IVR system through the voice call comprises the step of generating a DTMF (dual tone multi frequency) tone corresponding to the unique number and transferring the generated DTMF tone through the voice call.

27. A voice-screen ARS (automatic response system) service system comprising:
a terminal installed with an application for providing a connection means for allowing a connection to be made to a client company IVR (interactive voice response) system, connecting a voice call to the client company IVR system through an Internet network or a mobile communication network and connecting a data call to a VARS (visual ARS) service server when a user makes a request for a connection to the client company IVR system by using the connection means, receiving menu information including a plurality of menu items from the VARS service server through the data call, and displaying the received menu information including the menu items;
the VARS service server for receiving information on a menu item selected by the user from the terminal and transmitting screen information corresponding to the selected menu item to the terminal; and
the client company IVR system for transmitting an ARS main voice message to the terminal when the voice call is connected to the terminal and transmitting a voice message corresponding to the selected menu item to the terminal when receiving the information on the selected menu item from the terminal.

28. The voice-screen ARS service system as claimed in claim 27, wherein the connection means comprises a list of client companies, each of which can provide a VARS service, the list includes address information for connecting a voice call to an IVR system of each client company and unique information of each client company, and when the user selects one of the client companies included in the list, the application connects a voice call to an IVR system of the selected client company by using the address information corresponding to the selected client company and transmits the unique information corresponding to the selected client company to the VARS service server when or after connecting the data call to the VARS service server.

29. The voice-screen ARS service system as claimed in claim 28, wherein the connection means comprises a dial pad, and the application connects a voice call to an IVR system of a client company corresponding to a phone number, which the user inputs using the dial pad, and transmits the input phone number to the VARS service server when or after connecting the data call to the VARS service server.

30. The voice-screen ARS service system as claimed in claim 27, wherein the client company IVR system transmits an SMS (short message service) message for driving the application to the terminal when the voice call is connected to the terminal, and the application is driven by the received SMS message to connect the data call to the VARS service server.

31. The voice-screen ARS service system as claimed in claim 27, wherein the menu items includes a menu item to which a uniform resource locator for detailed information is linked, and when the user selects the menu item, the application accesses the linked uniform address locator to receive the corresponding detailed information and display the received detailed information on a screen of the terminal.

32. A voice-screen ARS (automatic response system) service system comprising:
a terminal installed with an application for connecting a data call to a VARS (visual ARS) service server by being driven by an SMS (short message service) message, receiving information to be displayed on a screen of the terminal from the VARS service server, and displaying the received information on the screen;
the VARS service server for transmitting menu information including a plurality of menu items to the terminal when the data call is connected to the terminal, receiving information on a menu item selected by a user from the terminal, and transmitting screen information corresponding to the selected menu item to the terminal; and
a client company IVR system for transmitting the SMS message for driving the application to the terminal when a voice call is connected to the terminal and transmitting voice information corresponding to the selected menu item to the terminal.

33. The voice-screen ARS service system as claimed in claim 32, wherein the VARS service server transmits the information on the selected menu item to the client company IVR system at a time when receiving the information on the selected menu item from the terminal and transmitting the screen information corresponding to the selected menu item to the terminal.
